Europäisches Patentamt

European Patent Office

Office européen des brevets

(11) Numéro de publication: **0 569 909 B1**

(12) **FASCICULE DE BREVET EUROPEEN**

(45) Date de publication du fascicule du brevet: **20.12.95**  (51) Int. Cl.[6]: **B29C 33/30**, B29D 30/06

(21) Numéro de dépôt: **93107577.4**

(22) Date de dépôt: **10.05.93**

Demande divisionnaire 95104921.2 déposée le 10/05/93.

(54) **Moule pour pneumatique, et procédé de moulage du pneumatique**

(30) Priorité: **13.05.92 FR 9205903**
**24.12.92 FR 9215818**

(43) Date de publication de la demande:
**18.11.93 Bulletin 93/46**

(45) Mention de la délivrance du brevet:
**20.12.95 Bulletin 95/51**

(84) Etats contractants désignés:
**AT BE CH DE ES FR GB IT LI LU NL**

(56) Documents cités:
**EP-A- 0 242 840**
**EP-A- 0 320 588**
**DE-A- 3 538 581**
**US-A- 3 999 907**

(73) Titulaire: **SEDEPRO**
**230, rue Lecourbe**
**F-75015 Paris (FR)**

(72) Inventeur: **Ladouce, Jean-Pierre**
**25, rue de Wailly**
**F-63000 Clermont-Ferrand (FR)**
Inventeur: **Laurent, Daniel**
**23, avenue de la Plaine Fleurie**
**F-38240 Meylan (FR)**

(74) Mandataire: **Bauvir, Jacques**
**Michelin & Cie,**
**Service SRK Brevets**
**23, Place des Carmes**
**F-63040 Clermont-Ferrand Cédex (FR)**

## Description

Le moulage des pneumatiques, en particulier de la bande de roulement de ceux-ci, doit satisfaire à un ensemble de conditions contraignantes.

L'une de ces conditions concerne spécifiquement l'opération de démoulage de la sculpture qui doit imposer aussi peu de contraintes que possible au pneumatique, sous peine de provoquer des perturbations, notamment dans l'architecture de renforcement de celui-ci. Cela conduit à préférer les moules dits "à secteurs", illustrés par exemple par le brevet US 3 779 677, plutôt que les moules dits "en 2 parties" (voir brevet US 2 874 405).

En outre, il est souhaitable que, surtout au niveau de la bande de roulement, il n'y ait pas de bavure due au caoutchouc ayant pu fluer entre deux éléments moulants, par exemple entre deux secteurs. C'est pour cette raison que, en règle générale, on ferme le moule (secteurs tous jointifs) avant d'imposer au pneumatique cru un supplément de conformation, par augmentation de la pression prévalant dans la membrane de vulcanisation, ce qui fait pénétrer le caoutchouc de la bande de roulement dans les éléments moulant la sculpture.

La demande de brevet EP 0 242 840 décrit un moule complètement rigide comportant une couronne périphérique de secteurs pour mouler la bande de roulement, deux coquilles latérales pour mouler les flancs (surfaces extérieures du pneumatique) et un noyau rigide pour mouler la surface intérieure du pneumatique. La conception totalement rigide de ce moule apporte de nombreux avantages quant à la qualité du pneumatique moulé car les formes géométriques obtenues sont d'une grande qualité (excellente circularité, en toute position transversale). Cependant, le moulage à volume imposé oblige à respecter des tolérances très étroites sur le volume de l'ébauche crue du pneumatique.

Un objectif de l'invention est de conserver l'avantage du moule rigide du point de vue du respect et de la parfaite maîtrise de la qualité géométrique des pneumatiques fabriqués avec ce type de moule, tout en rendant l'opération de moulage moins sensible aux fluctuations de volume des ébauches crues des pneumatiques à mouler et à vulcaniser.

La simplification des cinématiques d'ouverture et de fermeture des moules, et par conséquent la simplification des presses de vulcanisation constitue un autre objectif de l'invention.

Le moule de la présente invention, non seulement permet d'atteindre ces objectifs, mais aussi apporte une amélioration de portée générale au moulage et au démoulage des pneumatiques, que l'on fasse ou non appel à un noyau rigide pour mouler la cavité intérieure du pneumatique.

Le moule selon l'invention, comportant une couronne périphérique pour le moulage de l'extérieur de la bande de roulement d'un pneumatique, est caractérisé en ce que ladite couronne est constituée par un empilage dans la direction circonférentielle d'une pluralité d'éléments adjacents de faible épaisseur, orientés sensiblement radialement.

Suivant un autre aspect de l'invention, il est prévu des moyens autorisant un mouvement des éléments permettant à ladite couronne de grandir en diamètre, et des moyens de contrôle du mouvement des éléments. La position circonférentielle respective de chaque élément reste inchangée. De préférence, ce sont les éléments eux-mêmes qui, par la forme qui leur est donnée, comportent les moyens permettant à ladite couronne de grandir en diamètre : chaque élément prend appui sur les deux éléments adjacents pour assurer une sorte de répulsion élastique des éléments les uns par rapport aux autres dans la direction circonférentielle.

De la sorte, les réactions d'appui desdits éléments les uns sur les autres, c'est-à-dire les réactions d'appui orientées circonférentiellement, tendent en permanence à écarter les éléments les uns par rapport aux autres. Cet écartement ne peut qu'être accompagné d'un recul radial desdits éléments, que l'on peut rendre possible et contrôler comme cela va être expliqué en détails ci-après. Ainsi, le moule se comporte de façon moins rigide.

Les figures suivantes illustrent un mode de réalisation de l'invention et permettent d'en saisir tous les avantages.

La figure 1 est une coupe méridienne du moule de l'invention,

La figure 2 est une coupe perpendiculaire à l'axe de rotation, selon II II, à la figure 1,

La figure 3 est une vue dans la direction radiale, comme indiqué par la flèche III à la figure 2, amplifiant l'allure que peut prendre le moule selon l'invention,

La figure 4 est une vue dans la direction radiale orientée dans le sens opposé, selon le point de vue et l'orientation indiqués par la flèche IV à la figure 2.

La figure 5 illustre une seconde variante de réalisation de l'invention.

La figure 6 montre un anneau de maintien utilisé dans la seconde variante.

Les figures 7 et 8 montrent une variante de réalisation des éléments de faible épaisseur.

Dans chacune des variantes, le moule comporte deux coquilles 2 pour le moulage de l'extérieur des flancs d'un pneumatique.

Dans une réalisation de l'invention, la couronne périphérique de moulage de la bande de roulement est constituée par une multitude de tôles 1 adjacentes, disposées de telle sorte que le mouvement d'approche (moulage) et de recul (démoulage), qui se fait dans le plan de la tôle, soit purement radial en tout point du pneumatique. Ce mouvement est exactement radial, à l'épaisseur des tôles près, épaisseur correspondant à la résolution du moule pour définir la sculpture. On utilise par exemple des tôles d'acier; elles sont découpées en fonction des motifs 5 de sculpture qu'il faut réaliser.

En revanche, avec la technologie connue, même pour les moules à secteurs, le mouvement de démoulage de la sculpture ne peut pas être parfaitement radial : en observant le mouvement de recul des secteurs, on constate que le démoulage n'est radial que au niveau du plan médian de chaque secteur. Le démoulage se fait dans une direction formant un angle, par rapport à la direction radiale, d'autant plus grand que l'on s'éloigne, dans la direction circonférentielle, de cette position médiane, pour rejoindre les bords des secteurs. La valeur maximale de cet angle correspond à la moitié du développement angulaire du secteur.

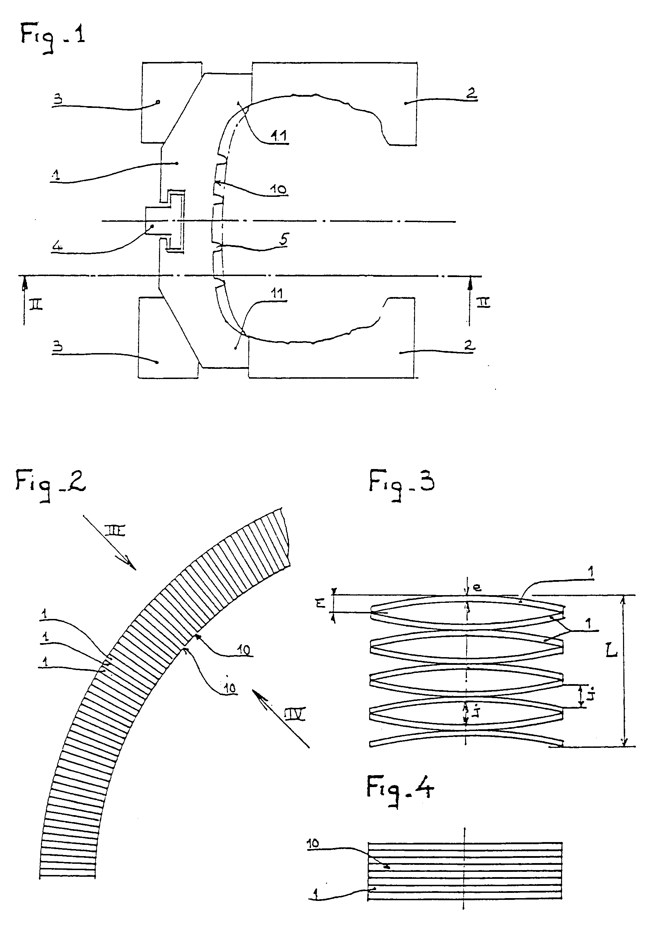

Pour former la couronne périphérique de moulage, les tôles 1 sont disposées de façon radiale. Autrement dit, lorsque l'on examine la couronne en coupe selon un plan perpendiculaire à l'axe du moule, comme à la figure 2, les tôles sont disposées de façon à comprendre un rayon, c'est à dire selon un angle de 90° pour reprendre la terminologie usuelle pour caractériser la trajectoire des câblés dans le pneumatique.

Eventuellement, on peut admettre que les éléments soient disposés selon un angle légèrement différent de 90°, s'en écartant par exemple de l'ordre de 10° à 15°.

Chaque tôle est découpée de telle sorte que sa tranche 10 assure le moulage de la sculpture. Tous les éléments usuels des sculptures, y compris les lamelles, peuvent être obtenus de cette façon.

Selon une caractéristique fondamentale du mode préféré de réalisation de l'invention, chacun des éléments adjacents constituant la couronne prend appui sur les deux éléments voisins de telle sorte que les réactions d'appui tendent en permanence à repousser les éléments les uns par rapport aux autres. On voit que chaque élément (ici, chaque tôle 1) est déformé de façon à augmenter son encombrement E dans le sens circonférentiel, par rapport à son épaisseur e, et à l'état libre de toute contrainte.

La figure 3 permet de bien comprendre de quelle façon les tôles 1 sont déformées, par exemple par pliage ou emboutissage, en représentant l'allure de la couronne périphérique, vue de l'extérieur du moule, en position d'ouverture. Chaque élément 1 a une épaisseur comprise de préférence entre 1% et 5% de sa longueur mesurée parallèlement à l'axe du moule. Typiquement, pour un moule de pneu pour véhicule de tourisme, l'épaisseur e de la tôle utilisée va varier de 0,1 mm à 5 mm. Elle est en tout cas bien plus faible que la dimension du pas de sculpture. Lesdites déformations des deux éléments ajacents sont déphasées afin que l'empilage des éléments les uns sur les autres atteigne une longueur cumulée L proche ou égale à la somme des encombrements E. On peut aussi empiler successivement des éléments déformés en intercalant chaque fois un élément non déformé.

Les déformations de deux éléments adjacents peuvent être opposées les unes par rapport aux autres, comme illustré par la figure 3, ou se développer perpendiculairement les unes par rapport aux autres ou de toute autre façon qui conduit les éléments adjacents à ne pas se coller les uns des autres sur toute leur surface.

Toutes les tôles 1 sont enfilées sur une ceinture 4 constituée par un profilé dont les extrémités peuvent pénétrer les unes dans les autres pour former un anneau de diamètre librement variable. Cette ceinture ne joue qu'un rôle de maintien, et ne joue pas de rôle direct dans la cinématique de fermeture et d'ouverture du moule. Cette ceinture ne doit pas introduire de frottements susceptibles de provoquer des mouvements tangentiels des tôles 1. La fermeture du moule est provoquée par le mouvement de frettes coniques 3, mobiles parallèlement à l'axe du moule. L'angle que forme la surface conique est bien entendu choisi pour être non coinçant. L'ouverture du moule est autorisée par l'écartement des frettes 3, et provoqué par les tôles elles-mêmes, par rappel élastique vers une configuration telle qu'illustrée par la figure 3, alors que, en position de fermeture, les tôles sont toutes jointives au moins du côté intérieur, comme schématisé par la figure 4.

Tous les détails de conception d'un moule appliquant cette invention vont apparaître parfaitement avec l'explication d'un dimensionnement particulier, convenant pour mouler les pneumatiques pour véhicules de tourisme.

Soit un moule constituée de 1500 tôles. Chaque tôle 1 est déformée et les déformations des tôles sont disposées en opposition les unes par rapport aux autres, comme représenté à la figure 3, de façon à ce que toutes les tôles restent en contact sur tout un éventail de positions radiales de la couronne de tôles 1.

On suppose que le jeu élastique "j" vaut 0,2 mm au maximum en position d'ouverture. Le jeu "j" est représenté à la figure 3.

Le cumul de tous les jeux vaut

0,2 mm x 1500 tôles = 300 mm,

ce qui permet d'absorber une variation en diamètre de

$$\frac{300 \text{ mm}}{\pi} \cong 100 \text{ mm au diamètre,}$$

soit 50 mm au rayon.

La différence entre la position de fermeture et la position d'ouverture de la couronne périphérique d'un tel moule, si l'on passe d'un jeu nul à un jeu de 0,2 mm entre tôles, atteint donc 50 mm de rayon, ce qui permet très facilement le démoulage et l'extraction des pneumatiques.

En pratique, on peut atteindre un jeu j suffisant simplement du fait des défauts de planéité des tôles utilisées, ce qui fait qu'il peut même ne pas être nécessaire de déformer les tôles comme expliqué. Les défauts de planéité se répartissent au hasard à la surface des tôles. Leur empilage sans aucune précaution particulière peut procurer le jeu fonctionnel nécessaire au rappel élastique vers la position dilatée.

La tendance au recul radial des éléments est donc obtenue automatiquement ; la position que prend naturellement le moule selon l'invention, en l'absence de toute sollicitation extérieure venant d'un effort imprimé par les frettes 3, est la position d'ouverture, permettant le démoulage du pneumatique après vulcanisation.

Vérifions aussi une contrainte spécifique au moulage sur noyau rigide : dans ce cas, chaque tôle va pénétrer dans le caoutchouc de la bande de roulement avant d'être à la position de fermeture (voir explications détaillées du problème spécifique dans le brevet EP 242 840 déjà cité). Cette pénétration se produit typiquement 7 mm avant la fin de course pour une sculpture usuelle de pneumatique pour véhicule de tourisme. On a donc :
course radiale : 7 mm
jeu cumulé périphérique : 7 mm x 2 $\pi \cong$ 45 mm
jeu entre tôles :

$$\frac{45 \text{ mm}}{1500 \text{ tôles}} \cong 0,03 \text{ mm.}$$

On sait par ailleurs que les caractéristiques physiques et rhéologiques des mélanges de caoutchouc utilisés pour les bandes de roulement sont telles que le caoutchouc ne pénètre pas dans un interstice de cette taille. Il est donc possible de mouler sur noyau rigide, sans craindre l'apparition de bavures sur le pneu, ou même l'impossibilité de fermeture du moule due au fluage du caoutchouc sous l'effet de pincement du caoutchouc entre la couronne périphérique et le noyau rigide.

La courbure transversale de la bande de roulement du pneumatique peut parfois être assez importante. Le jeu entre tôles 1 adjacentes peut donc être annulé de chaque côté de la bande de roulement aux endroits marqués 11 à la figure 1, alors qu'il subsiste un jeu dans la partie médiane.

Dans ce cas, la condition de jeu suffisamment faible doit être aussi vérifiée au niveau du plan médian, et au moment où les tôles vont pénétrer dans le caoutchouc, c'est-à-dire bien avant la position de fermeture du moule. Si à ce stade, on constate que le jeu entre tôles est trop grand, il faut augmenter le nombre de tôles pour diminuer à due concurrence chaque jeu, et/ou utiliser des tôles dont au moins l'extrémité côté tranche 10 de moulage présente une épaisseur progressivement décroissante, pour former un léger coin. Dans ce cas, il est possible d'avoir sensiblement le même jeu entre tôles tout le long de la tranche 10 de moulage.

Au besoin, pour tenir compte d'impératifs de réalisation de la sculpture, les tôles peuvent être conformées de façon à laisser une trace non rectiligne dans une vue telle que celle de la figure 4, par exemple pour suivre l'allure de certaines lamelles. Dans ce cas, les tôles sont toutes conformées de la même manière et sont empilées de façon à mettre en phase les conformations, contrairement aux déformations des tôles destinées à provoquer un recul élastique, ou aux défauts de planéité, qui sont disposés de façon à s'appuyer les uns sur les autres comme expliqué ci-dessus. Ceci illustre bien que la conformation dont il est question ici répond à une autre fonction que la déformation ou les défauts de planéité ayant un rôle spécifique dans la présente invention.

Les tôles peuvent aussi être disposées selon un angle légèrement différent de 90° par rapport au plan médian du moule, dont on voit la trace à la figure 4 (trait d'axe). L'invention peut s'accommoder d'un écart de l'ordre de 10° à 15° par rapport à l'angle droit. Mais en aucun cas on ne peut disposer des tôles perpendiculairement à l'axe du moule, ou suivant un angle faible par rapport au plan perpendiculaire à l'axe du moule, sous peine de ne plus avoir de rappel élastique vers la position dilatée. Les tôles doivent être disposées transversalement, c'est-à-dire partir d'une épaule et être orientées vers l'autre épaule du pneu à mouler.

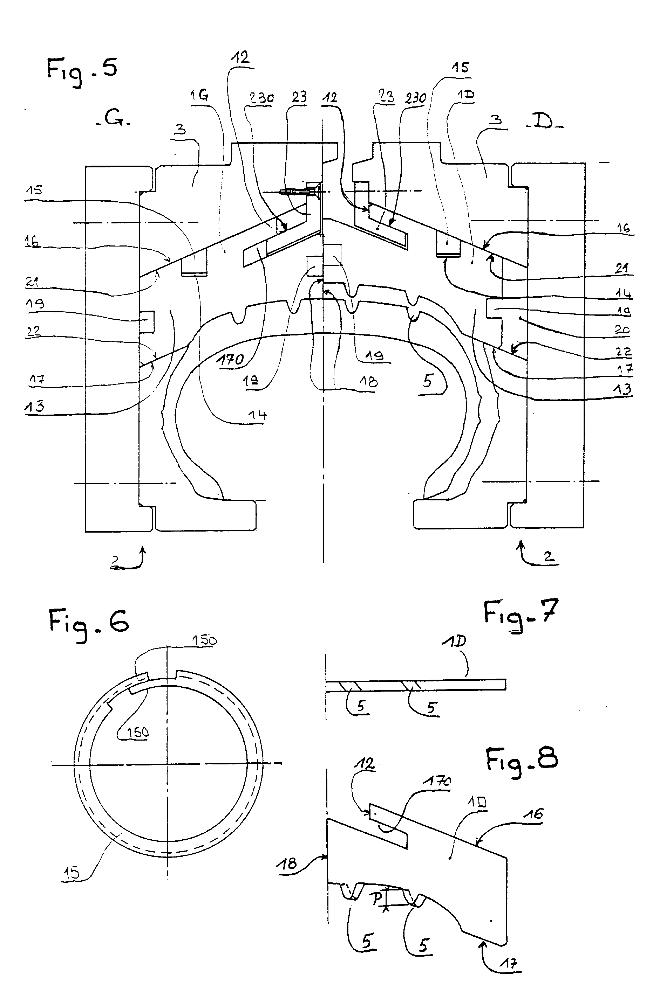

Toujours concernant la réalisation sur le moule des motifs de sculpture, il est également possible, comme montré aux figures 7 et 8, de choisir d'utiliser des éléments dont l'épaisseur atteint quelques mm, et de découper les sculptures 5 selon l'angle exact de moulage, et non pas plus simplement perpendiculairement au plan de l'élément. La réalisation des éléments impose alors d'utiliser une technique de découpage plus élaborée, mais la sculpture moulée et vulcanisée aura une allure bien plus fidèle au souhait du concepteur du pneumatique, alors que dans le cas des découpes toutes perpendiculaires au plan de l'élément, on ne peut qu'approcher la forme exacte souhaitée par une variation en marches d'escalier, avec une résolution d'autant meilleure que l'épaisseur des éléments utilisés est faible.

On vient de décrire une première variante de réalisation dans laquelle chaque élément s'étend transversalement sur toute la largeur de ladite couronne, c'est à dire d'une épaule à l'autre du pneu. La figure 5 illustre une autre variante de réalisation de l'invention, dans laquelle on a divisé la couronne périphérique en deux parties G et D. Celle-ci comporte donc, transversalement, deux éléments distincts 1D et 1G adjacents, appartenant chacun à l'une des parties, chacun présentant un bord 18 destiné à venir en contact sur l'autre partie avec le bord 18 correspondant de l'élément adjacent de ladite autre partie.

Cela permet de réaliser un moule communément désigné par l'appellation "en deux parties", qui se séparent en deux moitiés axiales sensiblement identiques lors de l'ouverture nécessaire au démoulage.

Ce type de moule, qui était d'usage courant pour mouler les pneus diagonaux, a été abandonné au profit du moule dit "à secteurs" lors du passage aux pneus radiaux, car il est préférable dans ce cas de pouvoir éloigner radialement les secteurs lors du démoulage.

Cependant, le moule proposé par la présente invention, dans sa version en deux parties, permet de combiner la plus grande simplicité du moule en deux parties avec la capacité d'ouverture par recul radial des éléments qui s'éloignent radialement de l'axe du moule. Dans une variante préférée de réalisation du moule, il comporte des moyens permettant de commander et de contrôler le mouvement d'avance et de recul des éléments d'une des parties de la couronne par le biais d'un mouvement en direction axiale de la coquille 2 adjacente.

On assimile ici à "coquille 2" aussi bien la pièce moulante que le support mécanique sur laquelle elle repose, qui peut aussi intégrer les frettes coniques 3 comme représenté à la figure 5. Il va de soi cependant que cette disposition n'est pas limitative, et que ces pièces pourraient dans certaines réalisations être mobiles les unes par rapport aux autres.

Il est possible d'obtenir tous les mouvements nécessaires aux opérations de moulage et de démoulage simplement en agissant dans la direction axiale sur les coquilles. A la figure 5, la partie droite représente le moule ouvert, et la partie gauche représente le moule fermé. Lesdits moyens permettant de commander et de contrôler le mouvement des éléments comprennent une frette conique 3 ayant une surface tronconique 21 orientée radialement vers l'intérieur, chaque élément 1D ou 1G étant en appui sur ladite surface tronconique 21 par sa tranche radialement supérieure 16.

Chaque coquille 2 comporte une rainure 20 dans laquelle l'extrémité latérale 13 de chaque élément 1D ou 1G est engagée. La surface radialement supérieure 21 de ladite rainure 20 est tronconique, l'extrémité latérale 13 de chaque élément 1D et 1G étant découpée selon une forme permettant à chaque élément 1D et 1G d'être en appui sur ladite surface tronconique 21.

Tout comme dans la première variante, les éléments 1D s'appuient les uns sur les autres dans la direction circonférentielle et la partie D de la couronne présente donc une tendance naturelle à prendre la position dilatée, qui est celle de la partie droite de la figure 5. Ceci est obtenu comme précédemment expliqué, soit par les défauts de planéité que présentent naturellement chacun des éléments 1D, qui ne sont pas les mêmes pour tous les éléments, soit en déformant les éléments et en les disposant judicieusement. De même pour les éléments 1G.

La surface tronconique supérieure 21 est en appui sur le dessus 16 de chaque élément 1G (ou 1D). Lorsque l'on rapproche axialement la coquille 2 correspondante, commme tous les éléments 1G (ou 1D) sont en appui dans le sens axial sur la couronne d'éléments adjacente D (ou G respectivement) par leurs bords 18, le seul mouvement possible des éléments 1G (ou 1D), en réponse au rapprochement axial de la coquille, est un mouvement d'avance radiale vers la position de fermeture du moule. Le mouvement de tous les éléments 1G (ou 1D) est bien entendu simultané. Ceci explique la fermeture du moule. De préférence, le mouvement des coquilles gauche et droite est symétrique, pour éviter tout frottement des bords 18 les uns sur les autres.

A partir de la position de fermeture, si l'on écarte axialement les coquilles 2, alors, de par la tendance naturelle à grandir en diamètre, chacune des parties G et D de la couronne reste en appui sur la surface tronconique supérieure 21. Ceci explique le mouvement d'ouverture du moule.

Suivant un mode de réalisation de l'invention, chaque élément comporte une encoche 14, les encoches 14 des éléments adjacents étant alignées pour former sur chaque partie de la couronne une rainure circonférentielle contenant un anneau de maintien 15 déformable dans le sens périphérique pour accompagner les mouvements de dilatation et/ou de contraction en diamètre de ladite couronne. Le rôle de cet anneau de maintien 15 est d'aider à maintenir les éléments 1D et 1G bien alignés chacun dans leur couronne. La figure 6 montre que l'anneau de maintien 15 est un anneau fendu, dont chaque extrémité 150 peut glisser sur l'autre, pour modifier librement le développement de l'anneau 15 sans interrompre sa continuité.

On voit aussi que chaque élément comporte deux encoches 19. Lors de la fabrication du moule, après empilage des éléments 1D ou 1G, on peut maintenir la couronne partielle ainsi obtenue en insérant un cerceau non déformable dans les encoches 19 pour permettre une opération de rectification visant à obtenir une portée aussi parfaitement tronconique que possible pour l'ensemble des tranches 16 (et au besoin aussi l'ensemble des tranches 17) des éléments 1D et 1G assemblés. Il est souhaitable, pour le bon fonctionnment du moule selon cette invention, d'obtenir un coefficient de frottement des éléments 1D et 1G sur les surfaces tronconiques 21 et 22 aussi faible que possible.

Lorsqu'un tel moule est utilisé avec un noyau rigide moulant la surface interne du pneu, alors il comporte de préférence une portée tronconique 22, au même angle que la surface tronconique 21, orientée radialement vers l'extérieur, chaque élément comprenant une tranche 17 susceptible de venir en appui sur ladite portée tronconique 22. L'extrémité latérale 13 de chaque élément 1D et 1G est découpée selon une forme correspondant à la section radiale méridienne de la rainure 20. Ceci permet de procurer l'effet piston entre coquille et couronne, dont le rôle est décrit dans le brevet EP 0 242 840 (op. cit.).

En outre, il comporte de préférence une portée tronconique 230, au même angle que la portée tronconique 22, également orientée radialement vers l'extérieur, chaque élément comprenant une tranche 170 susceptible de venir en appui sur ladite portée tronconique 230. Un appui des éléments sur les portées tronconiques 230 et 22 peut aider à provoquer le mouvement de recul radial desdits éléments lors de l'ouverture du moule. Ceux-ci, ou certains d'entre eux, peuvent en effet avoir tendance à coller sur le pneu, à rester incrustés dans la sculpture de la bande de roulement. L'effort d'arrachement peut donc provenir de l'appui sur les portées tronconiques 22 et 230, puis la tendance naturelle à l'ouverture de la couronne amène ensuite les éléments 1D et 1G en appui sur la surface tronconique 21.

Afin de (imiter le mouvement de recul radial des éléments 1D (et 1G), une butée 23 est prévu sur chaque coquille 2. Il s'agit d'une pièce rapportée sur les frettes 3, à l'extrémité axiale de celles-ci, qui comporte aussi la portée 230 évoquée ci-dessus. Cette butée 23 arrête les éléments 1D et 1G par rencontre avec l'épaulement 12 présent sur tous ceux-ci. Notons que le mouvement de recul nécessaire correspond seulement, dans cette variante de réalisation, à la profondeur P de sculpture, plus une petite course supplémentaire de sécurité. Ensuite, les parties gauche et droite du moule peuvent s'esquiver totalement librement par un mouvement axial pur. Cela simplifie considérablement la presse de vulcanisation recevant ce type de moule, et en limite l'encombrement dans le sens radial.

L'invention s'étend aussi, ainsi qu'il a déjà été évoqué, à un procédé de fabrication d'un pneumatique utilisant un moule tel qu'il vient d'être décrit, et qui peut comporter un noyau rigide servant de support pour l'assemblage des constituants, puis servant d'élément moulant la cavité intérieure du pneumatique pendant la vulcanisation. Dans tous les cas, un avantage de ce procédé de moulage est qu'il assure une excellente éventation lors du moulage.

L'avantage qu'il y a à utiliser ce type de moule combiné avec un noyau rigide est que dans ce cas, cela confère au moule une certaine élasticité, c'est-à-dire une certaine capacité à augmenter légèrement le volume de la cavité de moulage pour suivre la dilatation du caoutchouc résultant de l'augmentation de température, tout en répartissant parfaitement les jeux entre pièces de moule. Ceci est obtenu en laissant reculer axialement les coquilles 2, ou plus généralement les frettes coniques 3, au delà d'une certaine pression prévalant dans la cavité de moulage du pneu.

**Revendications**

1. Moule comportant une couronne périphérique pour le moulage de l'extérieur de la bande de roulement d'un pneumatique, caractérisé en ce que ladite couronne est constituée par un empilage dans la direction circonférentielle d'une pluralité d'éléments (1) adjacents de faible épaisseur, orientés sensiblement radialement.

2. Moule selon la revendication 1, caractérisé en ce qu'il est prévu des moyens autorisant un mouvement des éléments permettant à ladite couronne de grandir en diamètre, et des moyens de contrôle du mouvement des éléments.

3. Moule selon la revendication 1 ou 2, caractérisé en ce que chaque élément prend appui sur les deux éléments (1) adjacents de sorte qu'il apparaît une répulsion élastique entre éléments (1), qui permet à ladite couronne de grandir en diamètre.

4. Moule selon la revendication 2 ou 3, caractérisé en ce que les moyens de contrôle du mouvement des éléments comprennent essentiellement au moins une frette conique (3).

5. Moule selon l'une des revendications 1 à 4, caractérisé en ce que chaque élément (1) est réalisé en tôle.

6. Moule selon l'une des revendications 1 à 5, caractérisé en ce que chaque élément (1) a une épaisseur comprise entre 0,1 mm et 5 mm.

7. Moule selon l'une des revendications 1 à 5, caractérisé en ce que chaque élément (1) a une épaisseur comprise entre 1% et 5% de sa longueur mesurée parallèlement à l'axe du moule.

8. Moule selon l'une des revendications 1 à 7, caractérisé en ce que chaque élément (1) est déformé de façon à présenter au moins une déformation augmentant, à l'état libre de toute contrainte, son encombrement (E) dans le sens circonférentiel par rapport à son épaisseur (e), les déformations de deux éléments (1) adjacents étant déphasées.

9. Moule selon la revendication 8, caractérisé en ce que les déformations de deux éléments adjacents sont opposées les unes par rapport aux autres.

10. Moule selon l'une des revendications 1 à 9, caractérisé en ce que la couronne est divisée en deux parties (G et D), en ce que la couronne comporte, transversalement, deux éléments distincts (1D et 1G) et adjacents appartenant chacun à l'une des parties, chacun présentant un bord (18) destiné à venir en contact sur l'autre partie avec le bord (18) correspondant de l'élément adjacent de ladite autre partie.

11. Moule selon l'une des revendications 1 à 10, caractérisé en ce qu'il comporte deux coquilles (2) pour le moulage de l'extérieur des flancs d'un pneumatique.

12. Moule selon la revendication 11, caractérisé en ce qu'il comporte des moyens permettant de commander et de contrôler le mouvement d'avance et de recul des éléments d'une des parties de la couronne par le biais d'un mouvement en direction axiale de la coquille (2) adjacente.

13. Moule selon la revendication 12, caractérisé en ce que lesdits moyens permettant de commander et de contrôler le mouvement des éléments comprennent une frette conique (3)

ayant une surface tronconique (21) orientée radialement vers l'intérieur, chaque élément étant en appui sur ladite surface tronconique (21) par sa tranche radialement supérieure (16).

14. Moule selon la revendication 13, caractérisé en ce que lesdits moyens permettant de commander et de contrôler le mouvement des éléments comprennent au moins une portée tronconique, au même angle, orientée radialement vers l'extérieur, chaque élément comprenant une tranche (17, 170) susceptible de venir en appui sur ladite portée tronconique.

15. Moule selon l'une des revendications 10 à 14, caractérisé en ce que chaque élément comporte une ou plusieurs encoches (14), les encoches des éléments adjacents étant alignées pour former sur chaque partie de la couronne des rainures circonférentielles contenant un anneau de maintien (15) déformable dans le sens périphérique pour accompagner les mouvements de dilatation et/ou de contraction en diamètre de ladite couronne.

16. Moule selon l'une des revendications 1 à 15, caractérisé en ce qu'il comporte en outre un noyau rigide pour le moulage de la surface intérieure du pneumatique.

17. Moule selon l'une des revendications 1 à 16, caractérisé en ce que l'extrémité côté tranche (10) de moulage desdits éléments (1) présente une épaisseur progressivement décroissante, pour former un léger coin.

18. Procédé de fabrication d'un pneumatique, caractérisé en ce que l'on utilise un moule selon l'une des revendications 1 à 17.

19. Procédé de fabrication d'un pneumatique selon la revendication 18, caractérisé en ce que le pneumatique est progressivement assemblé sur un noyau rigide servant de support pour l'assemblage des constituants, puis servant d'élément moulant la cavité intérieure du pneumatique pendant la vulcanisation.

**Claims**

1. A mould comprising a peripheral ring for the moulding of the outside of the tread of a tyre, characterised in that said ring is formed by a stack in the circumferential direction of a plurality of adjacent elements (1) of slight thickness, oriented substantially radially.

2. A mould according to Claim 1, characterised in that means permitting movement of the elements permitting said ring to increase in diameter, and means for controlling the movement of the elements, are provided.

3. A mould according to Claim 1 or 2, characterised in that each element rests on the two adjacent elements (1) so that an elastic repulsion appears between elements (1), which makes it possible for said ring to increase in diameter.

4. A mould according to Claim 2 or 3, characterised in that the means for controlling the movement of the elements comprise essentially at least one conical hoop (3).

5. A mould according to one of Claims 1 to 4, characterised in that each element (1) is made of metal plate.

6. A mould according to one of Claims 1 to 5, characterised in that each element (1) has a thickness of between 0.1 mm and 5 mm.

7. A mould according to one of Claims 1 to 5, characterised in that each element (1) has a thickness of between 1% and 5% of its length, measured parallel to the axis of the mould.

8. A mould according to one of Claims 1 to 7, characterised in that each element (1) is deformed in such a manner as to present at least one deformation which, in a condition free of any stress, increases its size (E) in the circumferential direction with respect to its thickness (e), the deformations of two adjacent elements (1) being out of phase.

9. A mould according to Claim 8, characterised in that the deformations of two adjacent elements are opposed to each other.

10. A mould according to one of Claims 1 to 9, characterised in that the ring is divided into two parts (G and D), in that the ring comprises transversely two adjacent distinct elements (1D and 1G), each belonging to one of the parts, each having an edge (18) intended to come into contact on the other part with the corresponding edge (18) of the adjacent element of said other part.

11. A mould according to one of Claims 1 to 10, characterised in that it comprises two shells (2) for moulding the outside of the sidewalls of a tyre.

12. A mould according to Claim 11, characterised in that it comprises means making it possible to drive and control the movement of advance and recoil of the elements of one of the parts of the ring via a movement in axial direction of the adjacent shell (2).

13. A mould according to Claim 12, characterised in that said means which make it possible to drive and control the movement of the elements include a conical hoop (3) having a frustoconical surface (21) oriented radially towards the inside, each element resting on said frustoconical surface (21) via its radially upper edge (16).

14. A mould according to Claim 13, characterised in that said means which make it possible to drive and control the movement of the elements comprise at least one frustoconical surface, at the same angle, oriented radially towards the outside, each element having an edge (17, 170) capable or coming to rest on said frustoconical surface.

15. A mould according to one of Claims 10 to 14, characterised in that each element has one or more notches (14), the notches or the adjacent elements being aligned to form on each part of the ring circumferential grooves containing a holding ring (15) which is deformable in the peripheral direction in order to accommodate the movements of expansion and/or contraction in diameter of said ring.

16. A mould according to one of Claims 1 to 15, characterised in that it furthermore comprises a rigid core for the moulding of the inner surface of the tyre.

17. A mould according to one of Claims 1 to 16, characterised in that the moulding edge (10) end of said elements (1) is of progressively decreasing thickness so as to form a slight wedge.

18. A method of manufacturing a tyre, characterised in that a mould according to one of Claims 1 to 17 is used.

19. A method of manufacturing a tyre according to Claim 18, characterised in that the tyre is progressively assembled on a rigid core serving as a support for the assembly of the components and then serving as an element moulding the inner cavity of the tyre during the vulcanisation.

**Patentansprüche**

1. Reifenform mit einem umlaufenden Kranz zum Formen des Äußeren des Laufstreifens eines Luftreifens,
**dadurch gekennzeichnet, daß**
der Kranz durch eine in Umfangsrichtung verlaufende Stapelung einer Mehrzahl von benachbarten Elementen (1) von geringer Dicke gebildet ist, die im wesentlichen radial orientiert sind.

2. Form nach Anspruch 2,
gekennzeichnet durch
Mittel, die eine Bewegung der Elemente zulassen, durch die der Durchmesser des Kranzes wachsen kann, sowie Mittel zum Kontrollieren der Bewegung der Elemente.

3. Form nach Anspruch 1 oder 2,
dadurch gekennzeichnet, daß
jedes Element auf die zwei benachbarten Elemente (1) drückt, so daß eine elastische Abstoßung zwischen den Elementen (1) auftritt, die die Durchmesserzunahme des Kranzes ermöglicht.

4. Form nach Anspruch 2 oder 3,
dadurch gekennzeichnet, daß
die Mittel zum Kontrollieren der Bewegung der Elemente im wesentlichen eine kegelförmige Zwinge (3) umfassen.

5. Form nach einem der Ansprüche 1 bis 4,
dadurch gekennzeichnet, daß
jedes Element (1) aus Blech gebildet ist.

6. Form nach einem der Ansprüche 1 bis 5,
dadurch gekennzeichnet, daß
jedes Element (1) eine Dicke von zwischen 0,1 mm und 5 mm hat.

7. Form nach einem der Ansprüche 1 bis 5,
dadurch gekennzeichnet, daß
jedes Element (1) eine Dicke von zwischen 1 % und 5 % seiner Länge gemessen parallel zur Achse der Form hat.

8. Form nach einem der Ansprüche 1 bis 7,
dadurch gekennzeichnet, daß
jedes Element (1) verformt ist, so daß es wenigstens eine Verformung aufweist, die im beanspruchungsfreien Zustand dessen Ausdehnung (E) in Umfangsrichtung im Vergleich zu seiner Dicke (e) vergrößert, und daß die Verformungen zweier benachbarter Elemente (1) außer Phase sind.

9. Form nach Anspruch 8,
dadurch gekennzeichnet, daß
die Verformungen zweier benachbarter Elemente einander entgegengesetzt sind.

10. Form nach einem der Ansprüche 1 bis 9,
dadurch gekennzeichnet, daß
der Kranz in zwei Teile (G und D) unterteilt ist, daß der Kranz in Querrichtung zwei getrennte, benachbarte Elemente (1D und 1G) umfaßt, die jeweils zu einem der Teile gehören, und von denen jedes einen Rand (18) aufweist, der vorgesehen ist, um am anderen Teil mit dem entsprechenden Rand (18) des benachbarten Elements des anderen Teils in Kontakt zu kommen.

11. Form nach einem der Ansprüche 1 bis 10,
dadurch gekennzeichnet, daß
es zwei Schalen (2) zum Formen des Äußeren der Flanken eines Luftreifens umfaßt.

12. Form nach Anspruch 11,
dadurch gekennzeichnet, daß
sie Mittel zum Steuern und Kontrollieren der Ein- und Auswärtsbewegung der Elemente eines der Teile des Kranzes mit Hilfe einer Bewegung der benachbarten Schale (2) in axialer Richtung umfaßt.

13. Form nach Anspruch 12,
dadurch gekennzeichnet, daß
die Mittel zum Steuern und Kontrollieren der Bewegung der Elemente eine kegelförmige Zwinge (3) mit einer radial nach innen orientierten kegelförmigen Oberfläche (21) umfassen und daß jedes Element auf die kegelförmige Oberfläche (21) mit seiner radial oberen Kante (16) drückt.

14. Form nach Anspruch 13,
dadurch gekennzeichnet, daß
die Mittel zum Steuern und Kontrollieren der Bewegung der Elemente wenigstens eine radial nach außen orientierte Kegelfläche mit demselben Winkel umfassen und daß jedes Element eine Kante (17, 170) aufweist, die geeignet ist, um auf die Kegelfläche zu drücken.

15. Form nach einem der Ansprüche 10 bis 14,
dadurch gekennzeichnet, daß
jedes Element ein oder mehrere Kerben (14) aufweist, und daß die Kerben der benachbarten Elemente fluchten, um an jedem Teil des Kranzes umlaufende Rillen zu bilden, die einen in Umfangsrichtung verformbaren Haltering (15) enthalten, der die Spreiz- und/oder Kontraktionsbewegungen des Durchmessers des Kranzes mitmacht.

16. Form nach einem der Ansprüche 1 bis 15, dadurch gekennzeichnet, daß sie ferner einen steifen Kern zum Formen der Innenoberfläche des Luftreifens umfaßt.

17. Form nach einem der Ansprüche 1 bis 16, dadurch gekennzeichnet, daß das Formkantenende (10) der Elemente (1) eine fortlaufend abnehmende Dicke hat und dadurch leicht keilförmig ist.

18. Verfahren zur Herstellung eines Luftreifens, **gekennzeichnet durch** die Verwendung einer Form nach einem der Ansprüche 1 bis 17.

19. Verfahren zur Herstellung eines Luftreifens nach Anspruch 18, dadurch gekennzeichnet, daß der Luftreifen fortlaufend auf einem steifen Kern aufgebaut wird, der als Träger für den Zusammenbau der Bestandteile und dann als Formelement zum Formen des Innenhohlraums des Luftreifens während der Vulkanisierung dient.

Fig.1

3

2

1

11

10

4

5

II

II

3

2

11

Fig.2

III

1

1

1

10

10

IV

Fig.3

e

E

1

1

L

l

j

Fig.4

10

1

Fig.5

Fig.6

Fig-7

Fig.8